Europäisches Patentamt

European Patent Office

Office européen des brevets

(11) Publication number: **0 191 552**
A2

# (12) EUROPEAN PATENT APPLICATION

(21) Application number: 86300252.3

(22) Date of filing: 16.01.86

(51) Int. Cl.⁴: **F 16 D 3/78**

(30) Priority: 17.01.85 US 692119
13.11.85 US 797711

(43) Date of publication of application: 20.08.86
Bulletin 86/34

(84) Designated Contracting States: **CH DE FR GB IT LI NL**

(71) Applicant: **KOPPERS COMPANY, INC., Koppers Building, Pittsburgh Pennsylvania 15219 (US)**

(72) Inventor: **Calistrat, Michael M., 3202 Laquinta Drive, Missouri City Texas 77459 (US)**
Inventor: **Munyon, Robert E., 7821 Falling Leaves Court, Ellicott City Maryland 21043 (US)**

(74) Representative: **Bull, Michael Alan et al, Haseltine Lake & Co. Hazlitt House 28 Southampton Buildings Chancery Lane, London WC2A 1AT (GB)**

(54) **Flexible couplings.**

(57) A flexible coupling, for joining two longitudinally oriented shafts, comprises a hub fixed to each of said shafts and including a portion extending radially therefrom in a hub plane perpendicular to its shaft; a flexible torque transmitting means operably fastened to each of said hubs on its bearing side; and a generally cylindrical sleeve means operably connected by fastening means to each of said flexible torque transmitting means with each of said fastening means passing through their respective hub planes such that the overhang moment resulting from the weight of the flexible torque transmitting means is minimized.

FLEXIBLE COUPLINGS

This invention relates to flexible couplings and more particularly is concerned with disk-pack couplings.

Conventional disk-pack couplings are old and well understood in the art, see for example U.S. Patent Specification No. 1,188,113. However, known disk-pack couplings are not particularly well suited for high speed applications because so much of the weight of the coupling is centred at a distance from the shaft and shaft bearings of the coupled driving or driven member. The location of the centre of gravity of known disk-pack couplings causes a relatively large bending or overhung moment on the shafts which is unsatisfactory for high speed machinery.

U.S. Patent Specification No. 4,055,966 discloseas a disk-pack coupling in which the disk-pack is mounted over the coupling hub which does reduce the overhung moment on the shafts. However, the disk-pack is still mounted between the flanges of the coupling hub and sleeve and the overhung moment while being reduced still causes problems.

According to the present invention there is provided a flexible coupling, for joining two longitudinally oriented shafts, each of said shafts being engaged by a bearing and extending therefrom toward said other shaft to a distal end where each of said shafts is spaced from the distal end of said other shaft, said flexible coupling comprising:

(a) a hub fixed to each of said shafts and extending radially therefrom in a hub plane perpendicular to its shaft and each of said hubs having a bearing side facing the bearing engaging its shaft and a distal side facing the distal end of its shaft;

(b) a flexible torque transmitting means operably fastened to each of said hub members on its bearing side; and

(c) a generally cylindrical sleeve means operably connected by fastening means to each of said flexible torque transmitting means each pass through their respective hub planes such that the overhang moment resulting from the weight of the flexible torque transmitting means is minimized.

Preferably, the hub and the sleeve of the flexible coupling of the invention are each provided with a flange.

The present invention overcomes the shortcomings of prior art disk-pack couplings by minimizing the overhung moment caused by the weight of the disk-pack. In a disk-pack flexible coupling of the present invention the disk-pack is mounted on the outside of the coupling hub flange which is as close as possible to the bearing housing of the driving and driven shaft of the coupled members. In preferred embodiments of the invention the disk-pack is bolted to a hub flange in a conventional manner, and the disk-pack is bolted to the sleeve flange by long bolts which extend through holes in the hub flange. In one preferred embodiment an axial extension of the sleeve flange extends over the hub flange and the disk-pack, and the hub and sleeve flange are interlocking.

For a better understanding of the invention, and to show more clearly how the same may be carried into effect, reference will now be made, by way of example, to the accompanying drawings in which:

Figure 1 is a side elevational view, partly in section, of one embodiment of a flexible coupling according to the present invention;

Figure 2 is an end view, partly in section, of the coupling shown in Figure 1 taken along line II-II of Figure 1;

Figure 3 is a side elevational view, partly in section, of another embodiment of a flexible coupling according to the present invention;

Figure 4 is a side elevational view, partly in section, of the coupling shown in Figure 3 taken along line IV-IV of Figure 3;

Figure 5 is an exploded perspective view of the flexible coupling shown in Figures 3 and 4; and

Figure 6 is a perspective view of the flexible coupling shown in Figures 3 and 4.

It will be understood that the structure of disk-packs is old and well understood in the art and is fully described in, inter alia, U.S. Patent Specification No. 1,188,113 which description is incorporated herein by reference. Such description will not be repeated herein unless necessary to enable one skilled in the art to understand the present invention. Also, since the coupling at the driving and driven members form a mirror image of one another, only the coupling at the driving member will be described, it being understood that the description is equally applicable to the coupling at the driven member.

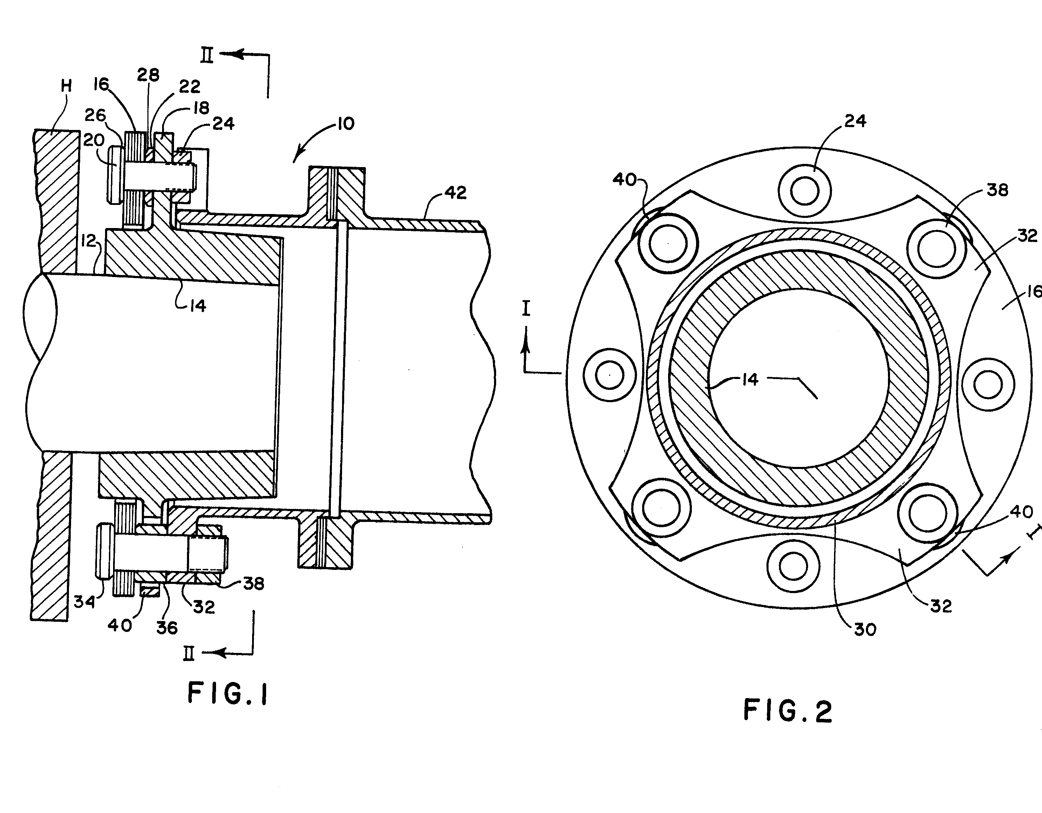

Referring firstly to Figures 1 and 2, one embodiment of a disk-pack flexible coupling of the present invention, generally designated as 10, is mounted on a shaft 12 which is mounted in a bearing housing H. The coupling 10 includes a hub 14 which is keyed onto the shaft 12 in a conventional manner. A disk-pack 16 is fixed to a flange 18 of hub 14 by means of bolts 20, bushing 21, spacer washers 22 and nuts 24. The disk-pack 16 comprises laminates of flexible rings made of metal or a fibre-reinforced plastics material and allow coupling 10 to compensate for misalignment between shaft 12 which is the driving shaft, and the driven shaft which is not shown. Bolts 20 and spacer washer 22 have rounded surfaces 26 and 28 to prevent scoring or scratching of the disk-pack 16.

Torque is transmitted from shaft 12 through hub 14 and disk-pack 16 to coupling sleeve 30. The disk-pack 16 is fixed to flange 32 of sleeve 30 by means of bolts 34, spacer rings 36 and nuts 38. Spacer rings 36 are placed in holes 40 in flange 18 of hub 14. Holes 40 are circular in the preferred embodiment and have a larger diameter than spacer rings 36. Holes 40 are cut into hub flange 18 so there is metal outside spacer rings 36 to contain the coupling in the event that the disk-pack 16 should fracture. It is to be understood, however, that any shaped passage could be formed in hub flange 18 to provide for spacer rings 36 and allow bolts 34 to pass therethrough. Sleeve 30 is fixed to spacer tube 42 in a conventional manner. Spacer tube 42 is fixed to the sleeve of the coupling for the driven shaft (not shown) and the torque from coupling 10 is transmitted through spacer tube 42 to that coupling.

It can be seen that the structure of the coupling of the present invention allows the disk-pack to be mounted outside the hub flange 18 and close to bearing housing H thereby minimizing the over-hung moment of shaft 12.

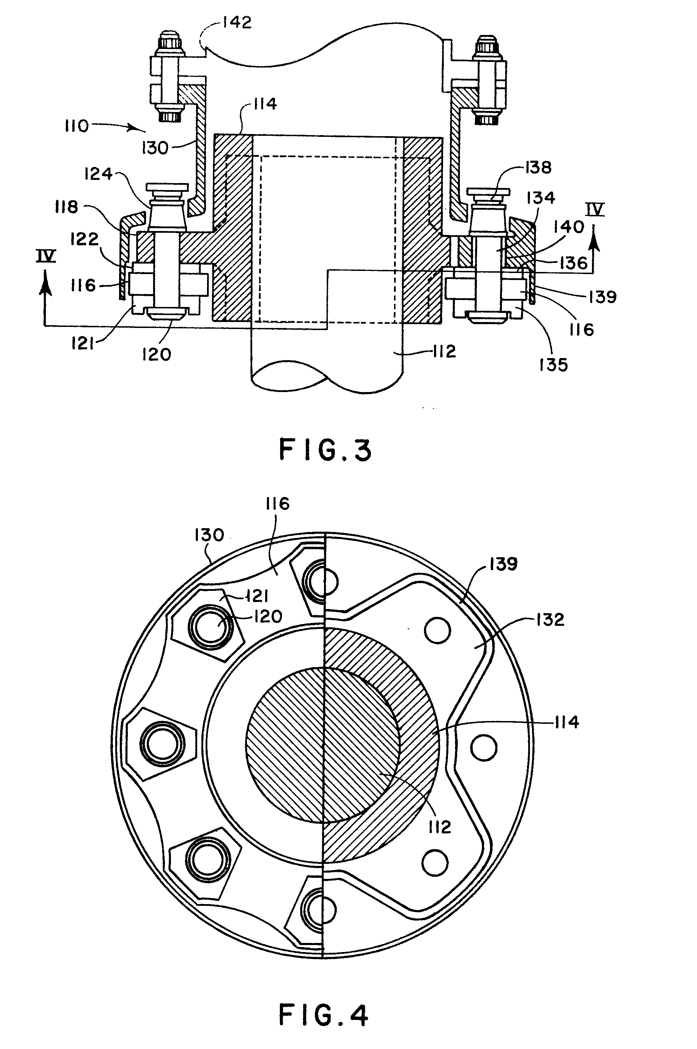

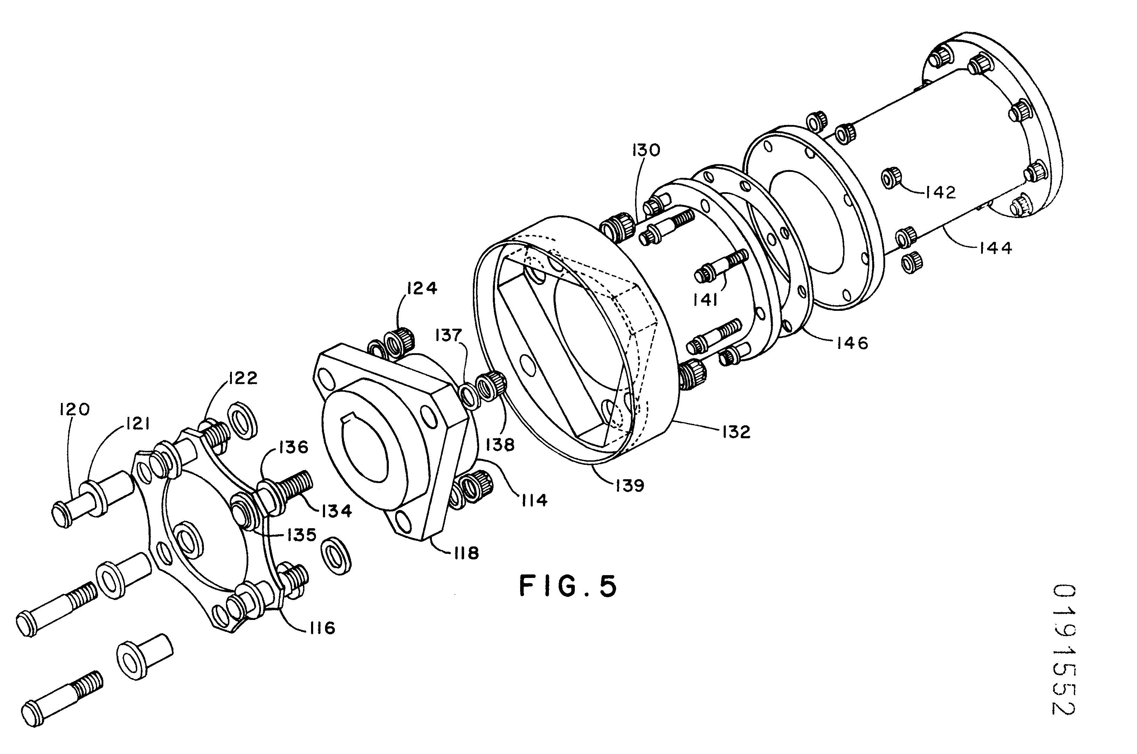

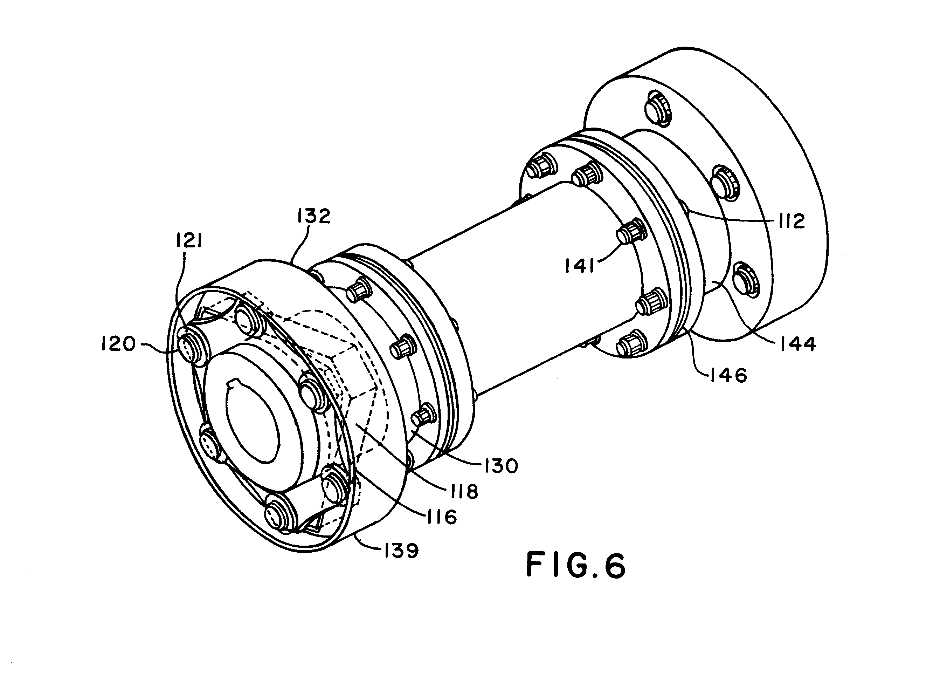

Referring now to Figures 3 to 6, another embodiment of a disk-pack flexible coupling of the present invention, generally designated as 110, is mounted on a shaft 112 (not shown in Figures 5 and 6) which is mounted in a bearing housing. The coupling 110 includes hub 114 which is keyed onto the shaft 112 in a conventional manner. A disk-pack 116 is fixed to a flange 118 of hub 114 by means of bolts 120, bushings 121, spacer washers 122 and nuts 124. The disk-pack 116 comprises laminates of flexible rings made of metal or a fibre-reinforced plastics material and allows coupling 110 to compensate for misalignment between shaft 112 which is the driving shaft, and the driven shaft which is not shown.

Torque is transmitted from shaft 112 through hub 114 and disk-pack 116 to a coupling sleeve 130. The disk-pack 116 is fixed to a flange 132 of sleeve 130 by means of bolts 134, bushings 135, spacer washers 136 and nuts 138. Spacer washers 137 are placed in holes 140 in flange 118 of hub 114. Sleeve flange 132 has an axial extension 139 which overlaps the hub flange 118 and the disk-pack 116 so that the sleeve flange 132 and its extension 139 interlock with the hub flange 118. As is also shown in Figures 5 and 6, the sleeve 130 is also connected by bolt 141 and nuts 142 to spacer tube 144. A shim pack 146 is interposed between the sleeve and spacer tube. It will be appreciated that such an interlocking arrangement will be generally more compact and weight-efficient than would be an arrangement in which juxtaposed hub and sleeve flanges were bolted together to effect a connection between the hub and sleeve. Furthermore, this arrangement provides for a protective shroud for the disk-pack. Holes 140 are cut into the hub flange 118 so that there is metal outside spacer rings 136 to contain the coupling in the event that the disk-pack 116 should fracture. It is to be understood however that any shaped passage could be formed in hub flange 118 to allow bolts 134 to pass therethrough. Sleeve 130 is fixed to spacer tube 144 in a conventional manner. Spacer tube 144 is fixed to the sleeve of the coupling for the driven shaft (not shown) and the torque from coupling 110 is transmitted through spacer tube 144 to that coupling.

0191552

CLAIMS

1. A flexible coupling, for joining two longitudinally oriented shafts, each of said shafts being engaged by a bearing and extending therefrom toward said other shaft to a distal end where each of said shafts is spaced from the distal end of said other shaft, said flexible coupling comprising:

(a) a hub fixed to each of said shafts and extending radially therefrom in a hub plane perpendicular to its shaft and each of said hubs having a bearing side facing the bearing engaging its shaft and a distal side facing the distal end of its shaft;

(b) a flexible torque transmitting means operably fastened to each of said hub members on its bearing side; and

(c) a generally cylindrical sleeve means operably connected by fastening means to each of said flexible torque transmitting means each pass through their respective hub planes such that the overhang moment resulting from the weight of the flexible torque transmitting means is minimized.

2. A flexible coupling as claimed in claim 1, wherein said hub and said sleeve are each provided with a flange.

3. A flexible coupling as claimed in claim 2, wherein the flange of said sleeve means and the flange of said hub are alternately and operably fastened to said flexible torque transmitting means.

4. A flexible coupling as claimed in claim 1, 2 or 3, wherein a spacer tube spaces said sleeve means.

5. A flexible coupling as claimed in claim 1, 2, 3 or 4, wherein said flexible torque transmitting means is a disk-pack.

6. A flexible coupling as claimed in claim 5, wherein said disk-pack comprises a laminate of flexible metal rings.

7. A flexible coupling as claimed in claim 5, wherein said disk-pack comprises fibre-reinforced plastic rings.

8. A flexible coupling as claimed in any one of claims 1 to 7, wherein said fastening means are bolts.

9. A flexible coupling as claimed in claim 8, wherein said bolts pass through spacer rings loosely fitted in said hubs of said coupling.

10. A flexible coupling as claimed in claim 9, wherein said bolts and rings have rounded edges on their surfaces which abut said flexible torque transmitting means.

11. A flexible coupling as claimed in claim 2 or in any one of claims 3 to 10 when appendant to claim 2, wherein the flange of said sleeve has an axial extension which overlaps said hub.

12. A flexible coupling as claimed in claim 2 or in any one of claims 3 to 11 when appendant to claim 2, wherein the hub flange extends radially therefrom and wherein said hub flange interlocks with the sleeve means.

13. A flexible coupling, for joining two longitudinally oriented shafts, each of said shafts being engaged by a bearing from which it extends to a distal end thereof which is spaced from the distal end of said other shaft, said flexible coupling including two coupling assemblies each of which is associated with a respective one of said shafts, characterised in that each of said coupling assemblies comprises:

(a) a hub fixed to its respective one of said shafts and having a portion extending radially therefrom in a hub plane perpendicular to its shaft and each of said portions having a bearing side facing the bearing with which its shaft is engaged and a distal side facing the distal end of its shaft;

(b) a flexible torque transmitting means operably fastened to each of said hub members on its bearing side; and

(c) a generally cylindrical sleeve means operably connected by fastening means to each of said flexible torque transmitting means, with each of said fastening means passing through their respective hub planes such that the overhang moment resulting from the weight of the flexible torque transmitting means is minimized.

14. A flexible coupling in accordance with claim 13, wherein said flexible coupling further include a spacer tube connected to the cylindrical sleeve means of each coupling assembly.

0191552

FIG.2

FIG.1

0191552

FIG.3

FIG.4

FIG.5

FIG.6